# EUROPEAN PATENT SPECIFICATION

(11) **EP 4 646 517 B1**
(45) Date of publication and mention of the grant of the patent: **20.05.2026**
(21) Application number: 24808455.0
(22) Date of filing: 29.10.2024
(51) Int. Cl.: E04H 4/00, B63B 34/70

(54) **GENERATOR SYSTEM FOR THE GENERATION OF WAVES**
GENERATORSYSTEM ZUR ERZEUGUNG VON WELLEN
SYSTÈME GÉNÉRATEUR POUR LA GÉNÉRATION DE VAGUES

(30) Priority: 03.11.2023 EP 23383120; 17.10.2024 EP 24383138
(43) Date of publication of application: 12.11.2025
(73) Proprietor: Instant Sport, S.L., 20002 Donostia-San Sebastián, Gipúzkoa (ES)
(72) Inventor: ODRIOZOLA SAGASTUME, José Manuel, 20002 Donostia-San Sebastián, Gipúzkoa (ES)
(74) Representative: Cueto, Sénida
(86) International application number: PCT/IB2024/060650
(87) International publication number: WO 2025/094049

(56) References cited:
- CN-B- 111 238 770
- DE-A1- 2 156 540
- DE-A1- 2 221 382
- GB-A- 1 553 206
- US-B1- 11 255 098

## Description

### Technical field

The invention relates to a generator system for the generation of surfable waves. In particular, the invention relates to a sequential type generator system using a set of tilting generators.

### State of the art

Several surfable wave generator systems are known in the State of the Art. Common among these is the use of sequential module generator systems based on the arrangement of a set of contiguous modules or movable elements acting in sequence to achieve a surfable wave. These modules or movable elements are referred to as "generators" in some publications. The modules or movable elements may be positioned, for example, in a row or in line, and may have a single row of modules or several rows or groups of modules. The movable elements may be horizontal pistons, tilting pistons ("flaps") or other types of movable elements that can be moved and/or tilted in a sequential and repeatable manner. In any case, the generators form a moving wall of changing shape capable of causing disturbances in the mass of water to generate surfable waves. For this purpose, the movable elements of the sequential modular system move with a time lag between them. In this way, the moving wall defined by the modules acquires a serpentine movement generating surfable waves. By controlling the offset between adjacent modules, it is possible to control the angle and curvature of the wave front to generate different types of waves.

Patent US11255098B1 discloses a modular type generator system comprising a plurality of generators or movable elements in series such as tilting pistons. As described in this publication, when a piston is immersed in the mass of water, both front and rear surfaces of the piston are exposed to the water, so that the movement of the piston produces waves in the desired direction (away from the front surface of the wave generator) but also rear waves in an undesired direction (away from the rear surface of the wave generator).

The generation of rear waves is problematic, since a rise in the water level at the rear of the generator can cause splashing or flooding, unwanted interference with the desired wave generation and, above all, it implies an increase in the energy consumption of the system. The invention US11255098B1 proposes a first possible solution to this problem, by using a displacer, configured to move synchronously with the wave generator, to move water from the rear of the wave generator. In this way, it seeks to compensate for changes in water elevation at the rear of the wave generator, so that the elevation of the water level behind the wave generator remains essentially constant, thereby reducing the power requirements of the drive system. However, this displacer-based system only partially compensates for the additional power consumption caused by the generation of back waves at the back of the pistons, as the displacer mitigates the back waves but does not completely eliminate them.

A second known solution, suitable for generating waves in shallow water and applicable in research, engineering and testing of coastal structures, is disclosed in the link http://www4.edesign.co.uk/product/piston-wave-generators/. The referred piston wave generators ("wavemakers") use a displacement technique that allows a perfectly horizontal movement of a front face of the piston for wave generation and, simultaneously, prevents the formation of back waves. For this purpose, the wave-generating piston consists of two interconnected components that rotate relative to each other. The rear surface of each of these two components forms part of a cylinder centred on its axis of rotation, so that no backwash wave is formed when the structure rotates. A support structure holds the generator piston in a modular unit. The upper part of this structure supports the main axis of rotation and other components of the drive mechanism.

A third known solution, based on a similar principle, is described in CN111238770B. The solution is mainly applicable in marine environment simulation and research. The wave generator of the invention CN111238770B also comprises two blocks that move synchronously by the action of a drive device. The assembly is supported on a frame. The front block is a horizontal type pushing piston, for wave generation in a frontal water zone ahead of the generator. The rear block is a rear wave compensation block positioned at the rear of the pushing block. The drive system causes a translational movement of the pushing block and, simultaneously, a synchronised rotation of the compensation block around a pivot axis located at the top of the frame. A front surface of the pushing block, which moves back and forth, always remains in a vertical position for optimised wave formation in the front water area. At the same time as the pushing block moves, the compensation block rotates so that the action force in a rear water area of the wave pushing block is eliminated. Thanks to the described mechanism, it is possible to prevent the formation of back waves and vortices in the back water area and reduce energy consumption. GB 1 553 206 A discloses a tilting generator according to the preamble of claim 1.

It is an aim of the present invention a tilting generator for the generation of surfable waves, with simple construction, suitable for forming part of modular generator systems. The tilting generator makes it possible to compensate for the generation of rear waves, without the need for a rear wave displacer or compensator mechanism (similar to those described above) whose movement must be synchronised with the movement of the tilting generator.

### Brief description of the invention

The invention relates to a generator system for the generation of waves W according to claim 1. The invention also relates to a surfable wave lagoon integrating the generator system.

The invention pursues a compromise to achieve simplicity of design of the tilting generator and its drive system, while at the same time enabling surfable waves of suitable quality to be obtained.

The tilting generator forms part of a waves W generator system in a mass of water. The tilting generator pivots around a top axis of rotation by the action of a drive system. The generator comprises a water displacing front face towards a front water zone of the mass of water ahead of the tilting generator for the formation of waves W. The generator also comprises a top face and a convex face extending from the front face towards the top face. Preferably, the convex face is cylindrical. Optionally, the convex face is cylindrical, being the centre of this cylindrical convex face centred on the axis of rotation of the tilting generator.

Top axis means an axis above the front face of the tilting generator. The tilting generator is substantially arranged under the axis of rotation, although a rear portion of the tilting generator may reach a higher height than the height of the axis of rotation, e.g., during the angular backward rotation of the tilting generator.

The configuration of the tilting generator used by the invention makes it possible to minimise the formation of back waves, providing a top axis tilting generator with adequate energy efficiency within the working tilting range of the piston that is defined later in this document. These advantages are achieved without the need for additional elements, such as displacers or other types of additional rotating blocks whose movement should be synchronised with the movement of the tilting generator. In the solutions mentioned in the introductory "Prior art" section, two elements are used that require synchronisation of movement: one of the elements is a pushing piston for wave formation; the other element is a displacer or a compensation block. In conventional solutions with a dual-mechanism, the pushing mechanism is mounted on the compensating mechanism, two movements being synchronised.

In the context of the present invention, a "back wave" will be interpreted as a wave generated towards an unwanted direction away from the rear surface (back) of the generator. These back waves imply an undesired energy consumption. Some solutions to alleviate this problem are described in the introductory section. Another solution is to have a surfable wave generator system as described in the patent ES2611764B1 that allows the generation of surfable waves at both sides of the generator.

The present invention provides an alternative solution to all of the above.

Another important advantage of the top axis tilting generator used in the invention is its simplicity of design. The tilting generator comprises a single solidary block capable of simultaneously contributing to wave generation and rear wave prevention. As indicated above, in the conventional solutions cited, the movement of the pusher piston must be synchronised with the movement of the compensator block. This synchronisation of movements usually requires a more complex drive mechanism to actuate the pusher block in coordination with the rear block. Thanks to the use of this tilting generator, the required drive system is simplified. In particular, the invention makes it possible to dispense with a specific mechanism intended to maintain a pusher surface in a vertical position, during the wave generation sequence, in coordination with a rear block.

As will be detailed below with reference to the figures and the embodiments of the detailed description, the characterising tilting generator used in the generator system of the invention can sufficiently approximate the behaviour of a horizontal piston in a certain range of sizing and movement of the tilting generator.

The invention relates to a generator system for the generation of waves W in a front water zone of a mass of water arranged on a floor (4). The generator system comprises at least a set of sequential modules arranged in adjacent locations. Each sequential module comprises a tilting generator according to the invention.

Each tilting generator pivots with a turning radius (R) defined in relation to a depth (H) of calm water measured ahead of the tilting generator. According to an optional aspect of the invention, the ratio R/H is greater than 1.2.

Optionally, the R/H ratio is greater than 2.

Optionally, the R/H ratio is greater than 2.1.

The tilting generator performs an angular rotation (α, - α) with respect to a reference position in which the front face is in a vertical position. According to an optional aspect of the invention, the angular rotation (α, - α) is limited to an absolute value of the angle (α) of 30°, i.e. the tilting generator optionally pivots between 30° and -30° with respect to the reference position.

Optionally, the angular rotation (α, - α) is limited to an absolute value of the angle (α) of 22°.

Optionally, the angular rotation (α, - α) is limited to an absolute value of the angle (α) of 13°.

Optionally, the floor comprises a recess adapted in shape to the convex face of the tilting generators.

Optionally, the top face of the tilting generators remains outside the mass of water during their rotation.

Further advantages and details of the invention are included in the detailed description, with reference to the particular embodiments of the figures.

### Brief description of the figures

The details of the invention are shown in the accompanying figures, which are not intended to limit the scope of the invention.
Figure 1a shows a perspective view of an embodiment of a modular type wave generator system according to the invention, provided with top axis tilting generators at their backward rotating limit position.
Figure 1b shows the generator system of Fig. 1a, with the tilting generators at their forward rotating limit position.
Figure 2a is a sectional side view of the system of Fig. 1a.
Figure 2b is a sectional side view of the system of Fig. 1b.
Figure 3 shows a perspective view of an embodiment of the tilting generator, illustrating its geometry and its different parts.
Figure 4 shows a perspective rear view of several tilting generators of the system of Figure 1a.
Figure 5 shows another perspective view of several tilting generators comprised in the generator system of Figure 1a.
Figure 6 shows an enlarged view of the top of two tilting generators of the previous figure.
Figure 7 is a detailed view showing the separation between two adjacent tilting generators of previous figure.
Figure 8 is a perspective view of a lagoon of surfable waves W comprising a modular generator system (1) according to the invention.

### Detailed description of the invention

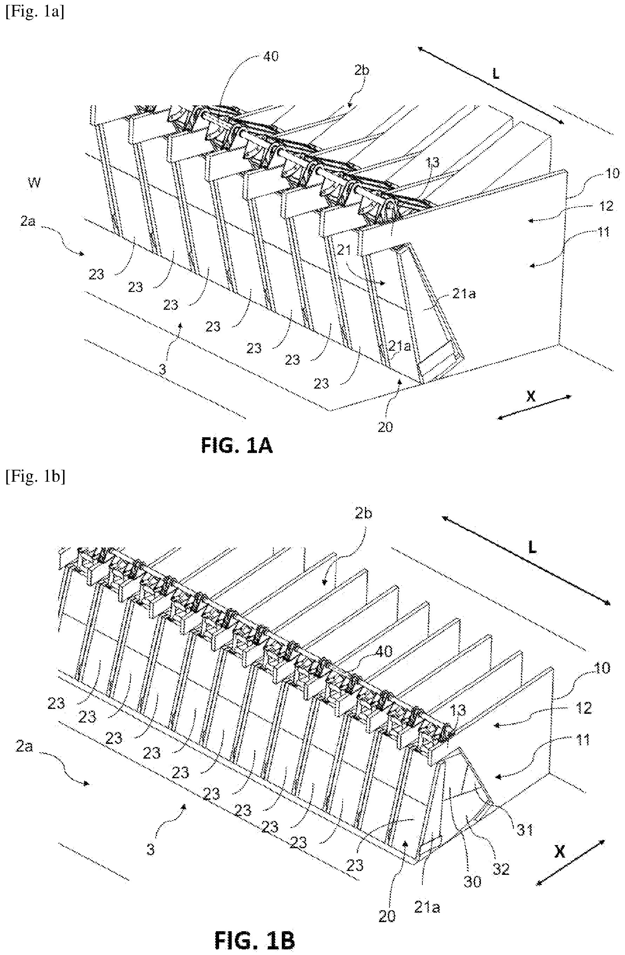

The invention relates to a generator system comprising at least a top axis tilting generator. Figures 1a and 1b show a particular embodiment of the generator system (1) of the invention, in this case, a sequential modular generator system (1) additionally provided with divisional intermediate structures arranged between each module. In the present invention, the movable elements of each module are tilting generators (20) which pivot around a top axis of rotation (40), in a sequential and repeatable manner, to generate surfable waves W. The tilting generators form a movable wall (3) of changing shape capable of causing disturbances in the mass of water to generate surfable waves.

Optionally, the tilting generators (20) are arranged along a longitudinal direction L forming a single row, as in the embodiment of Fig. 1a. In other embodiments, there may be more than one group or row of tilting generators (20). In each row, the movable wall (3) of the generator system (1) has a front face formed by all the front faces (23) of the tilting generators (20) facing a front water zone (2a) of the mass of water (2). The front face of the movable wall (3) thus formed pushes water from of the mass of water (2) for the formation of surfable waves W in the front water zone (2a), by means of a serpentine movement as the front faces (23) of the tilting generators (20) move with a certain offset between them.

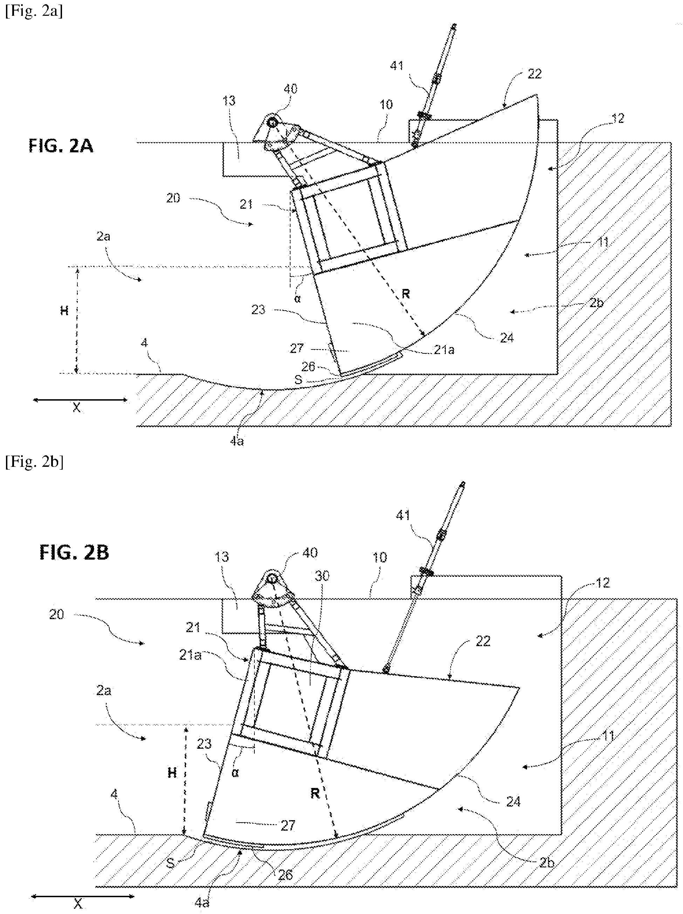

Figures 1a, 1b, 2a and 2b show the angular rotation of the tilting generators (20). Figures 1a and 2b show, respectively, a perspective view and a side view of the generator system (1) with the tilting generators (20) at their backward rotating limit position. Figures 1b and 2b illustrate the generator system (1) with the tilting generators (20) in their forward rotating limit position.

Figures 2a and 2b show how each tilting generator (20) is installed in a wave W lagoon partially submerged in the water. As can be seen in figures, the tilting generator (20) pivots around an axis of rotation (40) by the action of a drive system which may be mechanical, hydraulic or other types. The axis of rotation (40) is a top axis of rotation, located above a front face (23) of the tilting generator (20), as can be seen in Fig. 2a and Fig. 2b. The tilting generator is substantially disposed below the axis of rotation (40), although a rear portion thereof may reach a higher height than the height of the axis of rotation (40) during the angular backward rotation of the tilting generator (20), as shown in Fig. 2a.

The tilting generator (20) comprises a water displacing front face (23) for the formation of waves W in the front water zone (2a) ahead of the tilting generator (20) and a top face (22). Optionally, as in the embodiment of figures, the drive system (not shown in its entirety) of the tilting generators (20) is hydraulic and comprises a hydraulic cylinder (41) connected to the top face (22) of the tilting generator (20), so that the compression and extension of the hydraulic cylinder (41) causes the rotation of the tilting generator (20) around the axis of rotation (40). Optionally, as in the embodiment of figures, the frontal face (23) is flat. Also optionally, the top face (22) remains outside the mass of water (2) during the rotation of the tilting generator (20) for greater energy efficiency.

The tilting generator (20) used in the invention has the particularity of comprising a back or convex face (24) extending from the front face (23) to the top face (22). The term convex refers to the rear outer face of the tilting generator (20) seen from the rear water zone(2b). Preferably, as in the embodiment of figures. this convex face (24) is cylindric has its centre on the axis of rotation (40) of the tilting generator (20) to prevent the formation of back waves at the rear of the tilting generator (20). The axis of rotation (40) of one of the tilting generators (20) is represented with dashed lines in Fig. 1a, Fig. 1b, Fig. 4 and Fig. 5.

In other embodiments, the convex face (24) may not be cylindrical, e.g., it may be polyhedral.

In the embodiment of Fig. 2a and Fig. 2b, the cylindrical convex face (24), at least partially, delimits and forms the rear and bottom of the tilting generator (20), this cylindrical convex face (24) extending from a lower part of the front face (23) towards the rear of the top face (22) of the tilting generator (20). The surface contour of the tilting generator (20) also comprises two side faces (25).

The front face (23) and the top face (22) of the tilting generators (20) may consist of one continuous surface or comprise a plurality of surfaces or faces.

As already indicated in the brief description, the invention provides a top axis of rotation (40) tilting generator (20) with improved energy efficiency, within the tilting range defined below.

As shown in Fig. 2a and Fig. 2b, the tilting generator (20) pivots about the axis of rotation (40) with a turning radius (R). It is desirable that the axis of rotation (40) is located at a certain height. A depth (H) of the calm water, in relation to the floor (4) of the mass of water (2), measured in front of the tilting generator (20), is defined as a reference. It is common for the floor (4) to extend away from the tilting generator (20) with a slight slope. If the floor (4) has sloping areas, the depth (H) of calm water is measured from the floor (4) (without considering the recess (4a)) with the tilting generator (20) in its most forward position (see Fig. 2b). In embodiments where the convex face (24) is not cylindrical and circular, the turning radius (R) may be measured as a reference on the front face (23).

The tilting generator (20) presents a maximum behaviour of interest for a value of the ratio R/H at least greater than 1.2, preferably greater than 2 and more preferably greater than 2.1. With these values for the R/H ratio, the axis of rotation (40) and drive mechanism (not fully shown) of the tilting generator (20) are arranged at a suitable height, the turning radius (R) is sufficient to obtain quality surfable waves and it is possible to make the behaviour of the tilting generator (20) sufficiently close to that of a horizontal piston. For example, for a wave W height of 2 metres, the depth (H) can be set equal to 3 metres obtaining an advantageous R/H ratio of 2 m for a turning radius (R) of 6 metres. For that wave W height of 2 metres, the depth (H) can also be set at 2.85 metres obtaining an advantageous R/H ratio of 2.1 for a turning radius (R) of 6 metres. A slight decrease in the R/H ratio is also possible by placing the axis of rotation (40) at a lower height. For example, for a R/H value of 1.85 metres, an admissible surfable wave W can be obtained by modifying the tilting range of the tilting generator (20).

As also shown in Fig. 2a and Fig. 2b, taking as a reference the tilting generator (20) with its front face (23) in a vertical position perpendicular to the direction X, the tilting generator (20) performs an angular rotation (α, - α), i.e. it tilts towards the front water zone (2a) until the front face (23) forms an angle (α) with the vertical direction and backwards towards the rear water zone (2b) until the front face (23) forms an angle (- α) with the vertical direction. It is advantageous to limit the angular rotation (α, - α) by an angle (α) of absolute value 30°, preferably 22° and more preferably 13°.

Optionally, the value of R/H is between 2 and 2.1 metres and the absolute value of the angle (α) is 13°, the angular rotation (α, - α) being limited to between 13° and -13° with respect to the front face (23) in a vertical position.

The appropriate parameterisation of the R/H values allows the axis of rotation (40) of the tilting generator (20) to be arranged high enough to provide a sufficient horizontal pushing component of the tilting generator (20), so that it is possible to generate surfable waves W of suitable size and in different directions of advance of the W wave of interest. Although the movement of the tilting generator (20) is not completely horizontal and the pushing is, therefore, not uniform (the pushing caused in the water has a higher speed at the bottom of the tilting generator), surprisingly the simplified tilting generator (20) used by the invention is very advantageous, since it allows obtaining a variety of types of quality surfable waves W and preventing the generation of back waves that could significantly worsen energy efficiency.

The reduction of the vertical component of the tilting generator (20) also makes it possible to avoid or, at least, minimise a possible decoupling that may occur between the programmed movement for the sequence of the tilting generators (20) and the advance of the wave W, when the tilting generators (20) are part of a modular generator system (1), as in the embodiment of the figures. This undesired decoupling could imply a loss of height of the generated waves, negatively impacting the energy efficiency of the wave generator system in some cases.

To enhance energy efficiency and the other advantages mentioned above, it is also desirable that the tilting generator (20) is installed so that its lower end extends to a level very close to the floor (4) on which the mass of water (2) is placed. Further details of this feature are given below.

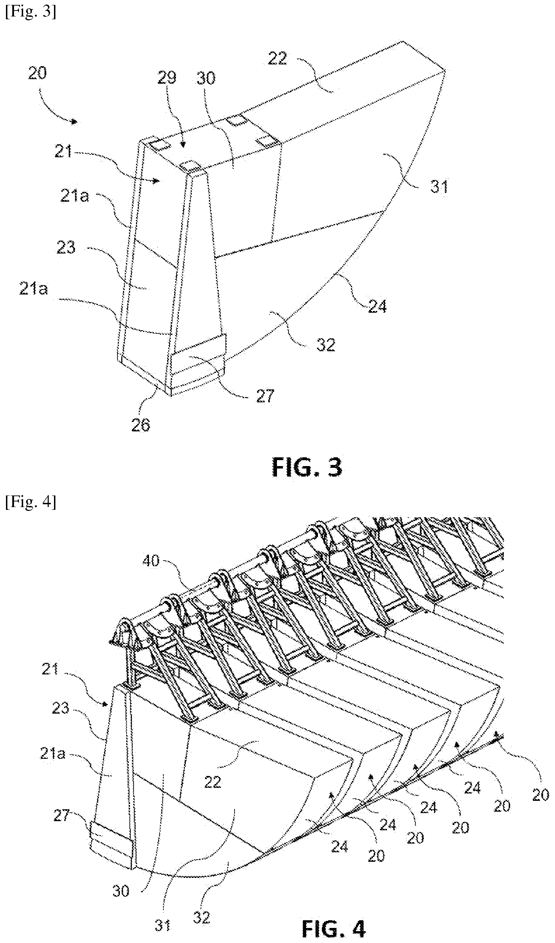

Figure 3 shows a perspective view of the geometry and the various parts of the tilting generators (20) of Figure 1a.

The tilting generator (20) comprises a differentiated structural portion (30), whose function is to serve as a support for the anchoring of a metal part to hold and connect the tilting generator (20) to the drive mechanism.

Optionally, the tilting generator (20) comprises a counterweight system to compensate the tilting generator (20) moment and minimise the torque or actuator force (depending on the type of actuator used). A suitable location of the counterweight helps to minimise the vertical forces of the tilting generator (20), balancing the buoyancy and weight of the tilting generator (20).

Optionally, the tilting generator (20) includes an additional watertight compartment, hollow or with a low density, located in a lower part of the tilting generator (20). The function of this compartment is to reduce the moment of inertia of the tilting generator (20) so that less force is required to accelerate it. In addition, it makes the tilting generator (20) less expensive.

The tilting generator (20) may be inflatable or comprise a foam block.

In any case, the tilting generator (20) is provided with a structural portion (30) to transmit the force of the drive motor to a large area of the tilting generator (20). Under this structural portion (30) a low-density or even hollow portion with a smaller structural strength is provided. Additionally, it is advantageous to have a counterweight, attached to the structural portion (30) and located in an upper zone away from the axis of rotation (40), so that the weight is loaded on the structural portion (30) and not on the lower part of lower density of the tilting generator (20).

In the particular embodiment of the figures, the tilting generator (20) comprises the three previously differentiated parts, according to the configuration detailed below. As shown in Fig. 3, the structural portion (30) is located in an upper part of the tilting generator (20) in a position close to and under the axis of rotation (40). This structural portion (30) extends from the front face (23) towards the rear of the tilting generator (20), being delimited at least by the front face (23), the side faces (25) and the top face (22) of the tilting generator (20). A compensation tank (31) is located behind the structural portion (30), extending from the structural portion (30) to the convex face (24) of the tilting generator (20). The compensation tank (31) is delimited at least by the top face (22), the side faces (25) and the convex face (24) of the tilting generator (20) and allows the incorporation of the counterweight.

Preferably, the compensation tank (31) is located in an accessible position of the tilting generator (20), away from the axis of rotation (40). In the embodiment of figures, the position of the compensation tank (31), at top of the tilting generator (20) and behind the structural portion (30), in a position further away from the axis of rotation (40) than the structural portion (30), is advantageous because it provides an easily accessible tank, also allowing a weight reduction to be optimised for a given torque compensation of the tilting generator.

Optionally, the compensation tank (31) can be filled with water, allowing the counterweighting function to be implemented by adding or removing ballast in a simple and economical way by using water from the mass of water (2) of the system. In this way, a regulable counterweight is provided for an optimisation of the power and/or force of the drive system used for the rotation of the tilting generator (20). The possibility of regulating the counterweight is particularly advantageous for generating certain waves that are more demanding in this respect. In this way, the motors of the drive system of the tilting generators (20) work optimally and with minimum peak power.

Under the structural portion (30) and the compensation tank (31), there is a watertight tank in the form of a bath tank (32). In the embodiment shown in Fig. 3, the bath tank (32) extends between the front face (23) and the convex face (24) of the tilting generator (20), being delimited at least by said front face (23) and convex face (24) and by the side faces (25) of the tilting generator (20).

The described compartment geometry, corresponding to the embodiment of figures, could present variations in other embodiments of the tilting generator (20). Also, in other embodiments, the counterweight may be implemented by means of metal blocks attached to the surface of the tilting generator (20) or in other ways.

Optionally, a lightweight material is used to manufacture the tilting generator (20), e.g. composite, thermoplastic material, aluminium or inflatable canvas. The use of a lightweight material, rather than metal, reduces the inertia of the tilting generator (20) and prevents corrosion problems.

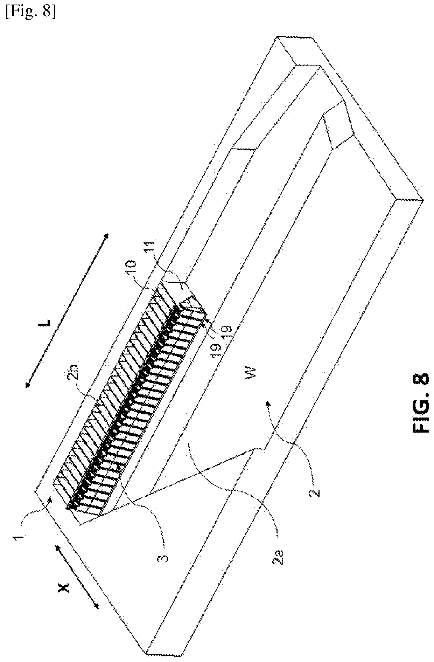

In the embodiment shown in Fig. 8, the generator system (1) comprises at least a set of sequential modules (19) arranged in adjacent locations, each sequential module (19) comprising a tilting generator (20). The invention also relates to a surfable wave W lagoon comprising the generator system (1) of the invention. The waves are generated in a front water zone (2a) of the mass of water (2) of the lagoon, arranged on a floor (4).

Optionally, the tilting generator (20) may be provided with a widened portion (21) configured to be located ahead of a lower part (11) of adjacent intermediate structures (10) when the tilting generator (20) is installed in a modular generator system (1) such as the one shown in Fig. 1a and is provided with such intermediate structures (10). A rear portion (29) of the tilting generator (20), located behind the widened portion (21), is narrower than the widened portion (21).

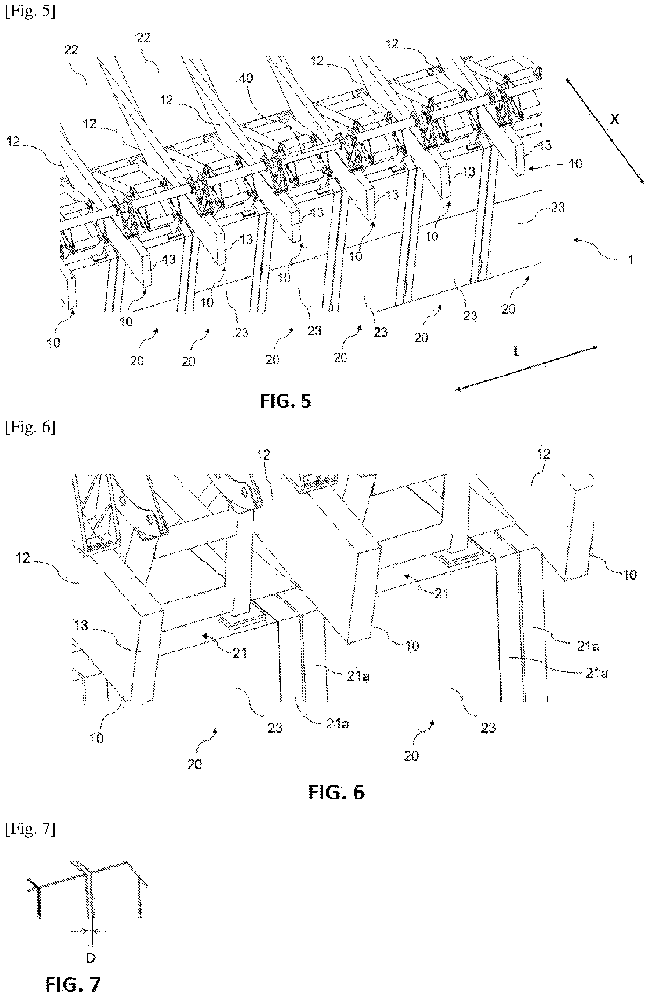

As can be seen in Fig. 1a, Fig. 1b and Fig. 5, each pair of contiguous adjacent locations is at least partially delimited by an intermediate structure (10), each intermediate structure (10) extending towards the front water zone (2a) in a direction X, perpendicular to the direction L. The widened portion (21) of each tilting generator (20) is located ahead of a lower part (11) of the intermediate structures (10). Fig. 2a and Fig. 2b show how the intermediate structures (10) comprise a lower part (11) and an upper part (12) with a cantilevered front part (13).

The said lower part (11) is preferably a part of the intermediate structures (10) which is below a maximum height reached by the water in contact with a pushing front face (23) of the tilting generator (20) when waves W are being generated. The widened portion (21) extends vertically upward from the lower end of the tilting generator (20), along the lower part (11) of the intermediate structures (10), to that maximum height at which the water contacts the pushing front face (23) (although the outgoing wave W may exceed that referenced maximum contact height).

The drive system of the tilting generators (20) may be at least partially supported on the upper part (12) of the intermediate structures (10). The cantilevered front part (13) also serves as a support for the installation of a cover (not shown) intended to conceal the sequential modules (19) of the generator system (1). The widened portion (21) of the tilting generator (20) is arranged ahead of the lower part (11) of the intermediate structures (10). This is not incompatible with the fact that there may be an upper part (12) of the intermediate structures (10) which may be further forward in the X direction with respect to the tilting generators (20).

Thanks to the fact that the widened portion (21) is located ahead of the adjacent intermediate structures (10), an advantageous configuration of set back intermediate structures (10) between the sequential modules (19) is obtained. According to this configuration, the lower part (11) of the intermediate structures (10) does not protrude ahead of the water-displacing front face (23) of the tilting generator (20) at any time during the movement sequence, as shown in Fig. 1a, Fig. 1b, Fig. 2a and Fig. 2b. This configuration helps to prevent the wave W from being affected by the turbulence formed in other conventional solutions at the exit of the divisional walls, as the intermediate structures (10) of the tilting generator (20) are located further back. In addition, the use of the intermediate structures (10) makes it possible to generate turned and curved wave fronts by adequately controlling the offset between adjacent tilting generators (20) and without undesired loss of wave height or energy.

In the embodiment of figures, the widened portion (21) of the tilting generators (20) remains ahead of the intermediate structures (10) during the whole movement sequence of the tilting generators (20). As can be seen in the figures, this widened portion (21) makes it possible to fill the gap between two adjacent tilting generators (20), reducing the separation between them and minimising the flow of water towards the rear of the generator. As a result, a better watertightness is provided and energy consumption is optimised. The water displacing front face (23) of each tilting generator (20) is located in close proximity to the front face (23) of the adjacent tilting generator (20), preferably with a gap (D) smaller than 20 mm, more preferably with a gap (D) smaller than 5 mm.

Optionally, the widened portion (21) extends from at least one of the side faces (25) of the tilting generator (20) extending the surface of the front face (23) of the tilting generator (20). Optionally, as in the embodiment of Fig. 3, the widened portion (21) comprises two side projections (21a) extending from the side faces (25). Additionally, the side projections (21a) forming the widened portion (21) comprise at least one sliding element (27) allowing to control and reduce the friction between two side projections (21a), i.e., between the widened portion (21) of one tilting generator (20) and the widened portion (21) of another adjacent tilting generator (20) arranged in an adjacent location of the generator system (1) or between the widened portion (21) and the side face (25) of another adjacent tilting generator (20). The side projections (21a) have enough depth, between widened portions or between a widened portion and another adjacent tilting generator, to ensure a suitable overlap for most types of surfable waves W. In alternative embodiments, the widened portion (21) of the tilting generator (20) comprises a single side projection (21a) which may be wider than the side projections (21a) of the embodiment shown in the figures.

With reference to the side view of Fig. 2a or Fig. 2b, each tilting generator (20) extends almost to the floor (4) of the mass of water (2). It is desirable that the tilting generator (20) is arranged substantially adjacent to the floor (4), so as to substantially prevent the flow of water under the generators of the generator system. "Substantially preventing the flow of water" means that there should be a slight tolerance or gap of a few millimetres from the floor. In practice, the installation is usually designed with a gap between the tilting generator (20) and the floor (4) of about 50 mm for a wave generator system up to 2 metres high. This gap allows to compensate for possible errors and inaccuracies in the manufacturing and/or assembly processes, or to prevent undesired failures caused by a stone or other element that could obstruct this space. However, although a gap of about 50 mm prevents the above problems, it may encourage excessive water flow in the X direction which could lead to a loss of wave height. As shown in Fig. 2a, optionally, the floor (4) has a recess (4a) in the area of the floor (4) under the tilting generator (20). This recess (4a) is adapted in shape to the convex face (24) of the tilting generators (20) over the entire angular rotation of the tilting generators (20). Additionally, an additional element, e.g. a lip or plate (26), can be provided in order to reduce the gap (S) between the tilting generator (20) and the floor (4).

Preferably, the supplementary element is comprised in the tilting generator (20), for example, it may be a plate (26) extending from the contour of the convex face (24) towards the floor (4). Optionally, the gap (S) between a lower end of the supplementary element and the floor (4) in the recess (4a) is set to a value smaller than 20 mm, preferably smaller 5 mm. This preferable implementation of the supplementary element facilitates the adjustment of the gap (S) in a precise manner and simplifies access for maintenance. In other embodiments, the supplementary element may be positioned flush with the floor (4).

The recess (4a) in the floor (4) not only reduces the gap (S) between the tilting generator (20) and the floor (4) but also improves hydrodynamics and energy efficiency, compared to lagoons with flat floors, by reducing turbulence at the lower part of the front face (23) of the tilting generator (20) close to the floor (4). The recess (4a) is necessary in embodiments where the supplementary element is attached to the tilting generator (20).

Preferably, the tilting generator (20) comprises a single solidary and rotating block, capable of contributing simultaneously to the generation of waves and to the prevention of back waves. That is to say, preferably, the main components of the tilting generator (20) are comprised in said solidary block which rotates by the action of the drive system in such a way that it is capable of displacing water towards the front water zone (2a) for the generation of surfable waves W and, simultaneously, it is capable of preventing or compensating the formation of waves in a rear water zone (2b) of the generator system (1). Thus, the rear wave compensation function is incorporated in the tilting generator (20), without the need for other components whose movement must be synchronised with the movement of the tilting generator (20).

In the embodiment shown in the figures, the components of the tilting generator (20), i.e. the differentiated structural portion (30), the compensation tank (31), the bath tank (32), as well as any additional elements, i.e. the plate (26), the lateral projections (21a) forming the widened portion (21) and the sliding elements (27), if present, are part of this single solidary block and tilt as a block driven by the drive system.

The existence of this solidary block is not incompatible with the presence of other fixed elements, such as parts of the drive system or other auxiliary elements of the tilting generator (20), which may not form part of the solidary block in the sense explained.

In summary, the tilting generator (20) can be configured to provide the following advantages:
compensation of rear waves with a consequent reduction in energy consumption;
behaviour close to the motion of a horizontal piston in the working range used for the generation of surfable waves W;
possibility of using a simple, easily alignable and low-maintenance rotating system compared to the guiding mechanism normally required for a horizontal piston;
possibility of using a simple drive system, e.g. integrating the motor assembly with the axis of rotation (40);
possibility to place the components of the drive system out of the water, e.g., above the intermediate structures (10) of a sequential module generator system.

In the embodiments of the generator system (1) provided with intermediate structures (10), additional advantages can be noted: a portion of the tilting generators (20) (the part that does not protrude with respect to the intermediate structures (10)) is located between two intermediate structures (10), with the usual advantages provided by this type of configuration. Thus, the intermediate structures (10) serve as support for the tilting generator (20) and for parts of its drive system, thus avoiding the use of submerged or cantilevered support structures. Furthermore, the intermediate structures (10) help to orient the water displacement in a confined direction, minimising lateral forces. In addition, they also allow the operation of each tilting generator (20) to be individualised with respect to other adjacent generators, thus facilitating repair and maintenance tasks.

Possible drive systems for the tilting generator (20) include, among others: a geared motor transmitting the rotational movement to the tilting generator (20) by means of gears or belts; a linear actuator (hydraulic, pneumatic or electric) that pushes, from a fixed point, a part of the tilting generator (20) located out of the water; a crank-crank system that transforms the rotational movement of a crown into the longitudinal movement of an arm, so that the arm connects the crown with the tilting generator and moves it or others.

In relation to the consumption of this type of sequential wave W generator systems (1), the highest consumption occurs during the phases of the sequence in which each tilting generator (20) must exert a pushing force on the mass of water, thus tilting towards the front water zone (2a). In the phases of the cycle in which the drive system pulls the tilting generator (20) in a direction opposite to the movement, it is possible to implement energy recovery.

## Claims

1. Generator system (1), for the generation of waves W in a front water zone (2a) of a mass of water (2), the generator system (1) comprising at least a tilting generator (20) and a drive system configured to tilt the tilting generator (20) around an axis of rotation (40), wherein
- the tilting generator (20) comprises a water displacing front face (23) towards a front water zone (2a) of the mass of water (2) ahead of the tilting generator (20), a top face (22) and a convex face (24) extending from the front face (23) towards the top face (22), **characterized in that**
- the axis of rotation (40) is arranged above the front face (23) and
- the tilting generator (20) pivots forward and backward around the axis of rotation (40) with a turning radius (R).

2. Generator system (1), according to claim 1, wherein the convex face (24) of the tilting generator (20) is cylindrical.

3. Generator system (1), according to claim 2, wherein the centre of the cylindrical convex face (24) is on the axis of rotation (40).

4. Generator system (1), according to any of claims 1 to 3, wherein the tilting generator (20) comprises a counterweight attached to a structural portion (30), wherein said structural portion (30) is located in an upper part of the tilting generator (20) and connected to the drive system.

5. Generator system (1), according to claim 4, wherein the counterweight is located behind the structural portion (30) at a location further away from the axis of rotation (40) than the structural portion (30).

6. Generator system (1) according to claim 4 or 5, wherein the counterweight is regulable.

7. Generator system (1), according to claim 6, wherein the tilting generator (20) comprises a compensation tank (31), behind the structural portion (30), wherein said compensation tank (31) can be filled with water from the mass of water (2) to implement the counterweight function.

8. Generator system (1), according to any of claims 4 to 7, wherein the tilting generator (20) further comprises a watertight compartment, located in a lower part of the tilting generator (20) under the structural portion (30) and under the compensation tank (31), the watertight compartment having a smaller structural strength than the structural portion (30).

9. Generator system (1), according to any of the claims 1 to 3, wherein each tilting generator (20) is additionally provided with a widened portion (21) to reduce the gap (D) between the tilting generator (20) and at least another adjacent tilting generator (20) of the generator system (1).

10. Generator system (1), according to any of the claims 1 to 3, wherein the tilting generator (20) is additionally provided with a supplementary element solidary to the tilting generator (20) to minimise the flow of water between the tilting generator (20) and a floor (4) under the mass of water (2).

11. Generator system (1), according to any of the preceding claims, wherein the tilting generator (20) conforms a single rotating solidary block.

12. Generator system (1), according to claim 11, wherein the tilting generator (20) comprises a structural portion (30) and, optionally, may comprise a lower compensation tank (31), a lower watertight compartment and a widened portion (21), wherein the aforementioned components, if present, are part of the single rotating solidary block.

13. Generator system (1), according to any of the preceding claims, wherein the frontal face (23) is flat.

14. Generator system (1), according to claim 1, wherein the front water zone (2a) of the mass of water (2) is arranged on a floor (4), wherein the generator system (1) comprises at least a set of sequential modules (19) arranged in adjacent locations, wherein each module comprises a tilting generator (20).

15. Generator system (1), according to claim 14, wherein the turning radius (R) is defined in relation to a depth (H) of calm water measured ahead of the tilting generator (20), the ratio R/H being greater than 1.2, preferably greater than 2 and more preferably greater than 2.1.

16. Generator system (1), according to claim 14, wherein the tilting generator (20) performs an angular rotation (α, - α) with respect to the reference position in which the front face (23) is in a vertical position, the angular rotation (α, - α) being limited to an absolute value of the angle (α) of 30°, preferably limited to an absolute value of the angle (α) of 22° and more preferably limited to an absolute value of the angle (α) of 13°.

17. Generator system (1), according to claim 14, wherein each pair of contiguous adjacent locations is at least partially delimited by an intermediate structure (10) extending towards the front water zone (2a) and wherein each tilting generator (20) comprises a widened portion (21) that is located ahead of a lower part (11) of the adjacent intermediate structures (10).

18. Generator system (1), according any of the claims 14 to 17, wherein the floor (4) comprises a recess (4a) adapted in shape to the convex face (24) of the tilting generators (20).

19. Generator system (1), according to any of the claims 14 to 18, provided with an energy recovery system, the energy being recoverable during phases of the wave generation sequence in which the drive system pulls the tilting generator (20).

20. Generator system (1), according to any of the claims 14 to 19, wherein the top face (22) remains outside the mass of water (2) during the rotation of the tilting generator (20).

21. Wave lagoon comprising a generator system (1) according to any of the claims 1 to 20.

## Patentansprüche

1. Generatorsystem (1) zur Erzeugung von Wellen W in einer vorderen Wasserzone (2a) einer Wassermasse (2), wobei das Generatorsystem (1) mindestens einen Kippgenerator (20) und ein Antriebssystem umfasst, das zum Kippen des Kippgenerators (20) um eine Drehachse (40) ausgebildet ist, wobei
- der Kippgenerator (20) eine Wasser verdrängende vordere Fläche (23) zu einer vorderen Wasserzone (2a) der Wassermasse (2) vor dem Kippgenerator (20), eine obere Fläche (22) und eine sich von der vorderen Fläche (23) zur oberen Fläche (22) erstreckende konvexe Fläche (24) umfasst, **dadurch gekennzeichnet, dass**
- die Drehachse (40) oberhalb der vorderen Fläche (23) angeordnet ist und
- der Kippgenerator (20) um die Drehachse (40) mit einem Schwenkradius (R) vor- und zurückschwenkt.

2. Generatorsystem (1) nach Anspruch 1, wobei die konvexe Fläche (24) des Kippgenerators (20) zylindrisch ist.

3. Generatorsystem (1) nach Anspruch 2, wobei der Mittelpunkt der zylindrischen konvexen Fläche (24) auf der Drehachse (40) liegt.

4. Generatorsystem (1) nach einem der Ansprüche 1 bis 3, wobei der Kippgenerator (20) ein Gegengewicht umfasst, das an einem Strukturteil (30) befestigt ist, wobei der besagte Strukturteil (30) in einem oberen Teil des Kippgenerators (20) angeordnet und mit dem Antriebssystem verbunden ist.

5. Generatorsystem (1) nach Anspruch 4, wobei das Gegengewicht hinter dem Strukturteil (30) an einer Stelle angeordnet ist, die weiter von der Drehachse (40) entfernt ist als der Strukturteil (30).

6. Generatorsystem (1) nach Anspruch 4 oder 5, wobei das Gegengewicht regulierbar ist.

7. Generatorsystem (1) nach Anspruch 6, wobei der Kippgenerator (20) einen Ausgleichsbehälter (31) hinter dem Strukturteil (30) umfasst, wobei der besagte Ausgleichsbehälter (31) mit Wasser aus der Wassermasse (2) gefüllt werden kann, um die Gegengewichtsfunktion auszuführen.

8. Generatorsystem (1) nach einem der Ansprüche 4 bis 7, wobei der Kippgenerator (20) ferner ein wasserdichtes Abteil umfasst, das sich in einem unteren Teil des Kippgenerators (20) unter dem Strukturteil (30) und unter dem Ausgleichsbehälter (31) befindet, wobei das wasserdichte Abteil eine geringere strukturelle Festigkeit als der Strukturteil (30) aufweist.

9. Generatorsystem (1) nach einem der Ansprüche 1 bis 3, wobei jeder Kippgenerator (20) zusätzlich mit einem verbreiterten Abschnitt (21) versehen ist, um den Spalt (D) zwischen dem Kippgenerator (20) und mindestens einem anderen angrenzenden Kippgenerator (20) des Generatorsystems (1) zu verringern.

10. Generatorsystem (1) nach einem der Ansprüche 1 bis 3, wobei der Kippgenerator (20) zusätzlich mit einem zusätzlichen Element versehen ist, das fest mit dem Kippgenerator (20) verbunden ist, um den Wasserfluss zwischen dem Kippgenerator (20) und einem Boden (4) unter der Wassermasse (2) zu minimieren.

11. Generatorsystem (1) nach einem der vorhergehenden Ansprüche, wobei der Kippgenerator (20) einen einzigen rotierenden festen Block bildet.

12. Generatorsystem (1) nach Anspruch 11, wobei der Kippgenerator (20) einen Strukturteil (30) umfasst und optional einen unteren Ausgleichsbehälter (31), ein unteres wasserdichtes Abteil und einen verbreiterten Abschnitt (21) umfassen kann, wobei die vorgenannten Komponenten, falls vorhanden, Teil des einzigen rotierenden festen Blocks sind.

13. Generatorsystem (1) nach einem der vorhergehenden Ansprüche, wobei die vordere Fläche (23) flach ist.

14. Generatorsystem (1) nach Anspruch 1, wobei die vordere Wasserzone (2a) der Wassermasse (2) auf einem Boden (4) angeordnet ist, wobei das Generatorsystem (1) mindestens einen Satz von aufeinanderfolgenden Modulen (19) umfasst, die an benachbarten Stellen angeordnet sind, wobei jedes Modul einen Kippgenerator (20) umfasst.

15. Generatorsystem (1) nach Anspruch 14, wobei der Wenderadius (R) definiert ist in Bezug auf eine Tiefe (H) des ruhigen Wassers, die vor dem Kippgenerator (20) gemessen wird, wobei das Verhältnis R/H größer als 1,2, vorzugsweise größer als 2 und besonders bevorzugt größer als 2,1 ist.

16. Generatorsystem (1) nach Anspruch 14, wobei der Kippgenerator (20) eine Winkeldrehung (α, - α) in Bezug auf die Referenzposition ausführt, in der sich die vordere Fläche (23) in einer vertikalen Position befindet, wobei die Winkeldrehung (α, - α) auf einen absoluten Wert des Winkels (α) von 30°, vorzugsweise auf einen absoluten Wert des Winkels (α) von 22° und besonders bevorzugt auf einen absoluten Wert des Winkels (α) von 13° begrenzt ist.

17. Generatorsystem (1) nach Anspruch 14, wobei jedes Paar angrenzender Stellen zumindest teilweise durch eine Zwischenstruktur (10) begrenzt ist, die sich in Richtung der vorderen Wasserzone (2a) erstreckt, und wobei jeder Kippgenerator (20) einen verbreiterten Abschnitt (21) umfasst, der sich vor einem unteren Teil (11) der angrenzenden Zwischenstrukturen (10) befindet.

18. Generatorsystem (1) nach einem der Ansprüche 14 bis 17, wobei der Boden (4) eine Aussparung (4a) umfasst, die in ihrer Form an die konvexe Fläche (24) der Kippgeneratoren (20) angepasst ist.

19. Generatorsystem (1) nach einem der Ansprüche 14 bis 18, versehen mit einem Energierückgewinnungssystem, wobei die Energie während Phasen der Wellenerzeugungssequenz, in denen das Antriebssystem den Kippgenerator (20) zieht, rückgewinnbar ist.

20. Generatorsystem (1) nach einem der Ansprüche 14 bis 19, wobei die obere Fläche (22) während der Drehung des Kippgenerators (20) außerhalb der Wassermasse (2) bleibt.

21. Wellenlagune, die ein Generatorsystem (1) nach einem der Ansprüche 1 bis 20 umfasst.

## Revendications

1. Système générateur (1) pour créer des vagues W dans une zone d'eau frontale (2a) d'une masse d'eau (2), le système générateur (1) comprenant au moins un générateur basculant (20) et un système d'entraînement configuré pour faire baculaire le générateur basculant (20) autour d'un axe de rotation (40), où
- le générateur basculant (20) comprend une face frontale (23) à déplacement d'eau vers une zone d'eau frontale (2a) de la masse d'eau (2) à l'avant du générateur basculant (20), une face supérieure (22) et une face convexe (24) s'étendant de la face frontale (23) vers la face supérieure (22), **caractérisé en ce que**
- l'axe de rotation (40) est disposé au-dessus de la face frontale (23) et
- que le générateur basculant (20) pivote vers l'avant et vers l'arrière autour de l'axe de rotation (40) avec un rayon de rotation (R).

2. Système générateur (1) conformément à la revendication 1, dans lequel la face convexe (24) du générateur basculant (20) est cylindrique.

3. Système générateur (1) conformément à la revendication 2, dans lequel le centre de la face convexe cylindrique (24) est sur l'axe de rotation (40).

4. Système générateur (1) conformément à l'une quelconque des revendications 1 à 3, où le générateur basculant (20) comprend un contrepoids lié à une portion structurelle (30) dans lequel la partie structurelle (30) est situé dans une partie supérieure du générateur basculant (20) et reliée au système d'entraînement.

5. Système générateur (1) conformément à la revendication 4, dans lequel le contrepoids est situé derrière la partie structurelle (30) et plus loin de l'axe de rotation (40) que la partie structurelle (30).

6. Système générateur (1) conformément à la revendication 4 ou 5, dans lequel le contrepoids est réglable.

7. Système générateur (1) conformément à la revendication 6, dans lequel le générateur basculant (20) comprend un réservoir de compensation (31), derrière la partie structurelle (30), dans lequel ledit réservoir de compensation (31) peut être rempli d'eau tirée de la masse d'eau (2) pour réaliser la fonction de contrepoids.

8. Système générateur (1) conformément à l'une quelconque des revendications 4 à 7, dans lequel le générateur basculant (20) comprend par ailleurs un compartiment étanche, situé dans une partie inférieure du générateur basculant (20) sous la partie structurelle (30) et sous le réservoir de compensation (31), le compartiment étanche ayant une résistance structurelle inférieure à la partie structurelle (30).

9. Système générateur (1) conformément à l'une quelconque des revendications 1 à 3, dans lequel chaque générateur basculant (20) est par ailleurs muni d'une portion élargie (21) pour réduire l'espace (D) entre le générateur basculant (20) et au moins un autre générateur basculant (20) adjacent du système générateur (1).

10. Système générateur (1), conformément à l'une quelconque des revendications 1 à 3, dans lequel le générateur basculant (20) est en outre équipé d'un élément supplémentaire solidaire au générateur basculant (20) pour réduire le débit d'eau entre le générateur basculant (20) et un plancher (4) sous la masse d'eau (2).

11. Système générateur (1) conformément à l'une quelconque des revendications précédentes, dans lequel le générateur basculant (20) compose un bloc solidaire rotatif unique.

12. Système générateur (1) conformément à la revendication 11, dans lequel le générateur basculant (20) comprend une partie structurelle (30) et, en option, peut comprendre un réservoir de compensation inférieur (31), un compartiment inférieur étanche et une partie élargie (21), dans lequel les composants mentionnés ci-dessus, s'ils sont présents, font partie du bloc solidaire rotatif unique.

13. Système générateur (1) conformément à l'une quelconque des revendications précédentes, dans lequel la face frontale (23) est plate.

14. Système générateur (1), conformément à la revendication 1, dans lequel la zone d'eau frontale (2a) de la masse d'eau (2) est disposée sur un plancher (4) dans lequel le système générateur (1) comprend au moins un ensemble de modules séquentiels (19), disposés dans des emplacements adjacents, dans lequel chaque module comprend un générateur basculant (20).

15. Système générateur (1) conformément à la revendication 14, dans lequel le rayon de rotation (R) est défini par rapport à une profondeur (H) d'eau calme mesurée à l'avant du générateur basculant (20), le rapport R/H étant de plus de 1.2, de préférence supérieur à 2, et encore plus de préférence supérieur à 2.1.

16. Système générateur (1), conformément à la revendication 14, dans lequel le générateur basculant (20) réalise une rotation angulaire (α, -α) par rapport à la position de référence dans lequel la face frontale (23) est en position verticale, la rotation angulaire (α, -α) étant limitée à une valeur absolue de l'angle (α) de 30°, de préférence limitée à une valeur absolue de l'angle (α) de 22° et encore plus de préférence limitée à une valeur absolue de l'angle (α) de 13°.

17. Système générateur (1) conformément à la revendication 14, dans lequel chaque paire d'emplacements adjacents contiguë est au moins partiellement délimitée par une structure intermédiaire (10) s'étendant vers la zone d'eau frontale (2a) et dans lequel chaque générateur basculant (20) comprend une partie élargie (21) qui est située plus avancée d'une partie inférieure (11) des structures intermédiaires adjacentes.

18. Système générateur (1) conformément à l'une quelconque des revendications 14 à 17 dans lequel le plancher (4) comprend une encoche (4a) avec une forme adaptée à la face convexe (24) des générateurs basculants (20).

19. Système générateur (1) conformément à l'une quelconque des revendications 14 à 18, muni d'un système de récupération d'énergie, l'énergie étant récupérable pendant les phases de la séquence de génération d'eau dans lequel le système d'entraînement tire le générateur basculant (20).

20. Système générateur (1) conformément à l'une quelconque des revendications 14 à 19, dans lequel la face supérieure (22) reste hors de la masse d'eau (2) pendant la rotation du générateur basculant (20).

21. Une lagune à vagues comprenant un système générateur (1) conformément à l'une quelconque des revendications 1 à 20.
